(19)

Europäisches
Patentamt
European
Patent Office
Office européen
des brevets

(11)     **EP 2 626 557 A1**

(12)     **EUROPEAN PATENT APPLICATION**

(43) Date of publication:
**14.08.2013  Bulletin 2013/33**

(51) Int Cl.:
**F03D 11/00** *(2006.01)*

(21) Application number: **12154477.9**

(22) Date of filing: **08.02.2012**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO RS SE SI SK SM TR</b><br>Designated Extension States:<br><b>BA ME</b></td><td>(71) Applicant: <b>Siemens Aktiengesellschaft<br>80333 München (DE)</b><br><br>(72) Inventor: <b>Madsen, Finn Daugaard<br>7190 Billund (DK)</b></td></tr>
</table>

(54)     **De-icing a rotor blade in dependence of a chill-factor**

(57)     It is described a method for operating a wind turbine (100), in particular during an icing condition, the method comprising: obtaining information (127, 129, 131) indicative of a rate of heat loss of a rotor blade (109) of the wind turbine (100); controlling (133, 134) the wind turbine based on the information.

Printed by Jouve, 75001 PARIS (FR)

**Description**

Field of invention

The present invention relates to a method and to an arrangement for operating a wind turbine during an icing condition, wherein a wind speed and temperature, in particular a chill-factor, is taken into account for adjusting the rotation speed of the rotor and for operating a de-icing system.

Art Background

During operation of a wind turbine having plural rotor blades connected to a rotation shaft ice (the solid form of water forming below 0 °C) may develop or may adhere to the rotor blades. Thereby, operation of the wind turbine may be deteriorated, since the airfoil, i.e. the outer surface shape of the rotor blade, is altered due to the adhered ice to impair aerodynamic properties. Thereby, it is known to apply a de-icing method for de-icing the rotor blade.

WO 2011/018695 A1 discloses a de-icing film for a wind turbine airfoil, wherein the thermoelectric film generates heat upon application of a voltage differential across the thermoelectric film to de-ice the airfoil.

WO 2010/028653 A2 discloses a low power heating for a rotor blade, wherein the rotor blade comprises at least one area with electrical conductive nanoparticles forming an electrical conductive area on the rotor blade.

There may be a need for a method and for an arrangement for operating a wind turbine, in particular during a temperature below zero degrees centigrade (0 °C), wherein an effective de-icing is performed and wherein the efficiency of the wind turbine, in particular regarding its power production, is improved. Further, there may be a need for operating a wind turbine, wherein components of the wind turbine are not exposed to excessive mechanical load during conditions of forming ice on the rotor blades.

Summary of the Invention

This need is solved by the subject matter of the independent claims. The dependent claims specify particular embodiments of the present invention.

According to an embodiment of the present invention it is provided a method for operating a wind turbine, in particular during an icing condition, further in particular during a temperature below zero degrees, the method comprising: obtaining information indicative of a rate of heat loss of a rotor blade of the wind turbine; and controlling the wind turbine based on the information.

Operating the wind turbine at a temperature at an icing condition (such as at a temperature below zero degrees centigrade or at a temperature below two degrees centigrade, in particular during snowing or precipitating or raining) involves the risk of ice formation on one or more rotor blades connected to a rotation shaft which in turn is mechanically connected to an electrical generator for generating electric energy from the rotating shaft upon impact of wind onto the one or more rotor blades. Ice adhered to an airfoil of the rotor blade may compromise the aerodynamic properties of the rotor blade, thereby decreasing the efficiency of energy conversion from wind energy to electric energy.

The rate of heat loss may be related to a rate of lost thermal energy per time from the rotor blade. The rate of heat loss may be quantitatively or qualitatively characterized. In particular, the rate of heat loss may be estimated or may be based on a simulation or a physical model of the rotor blade when exposed to a particular ambient temperature and to a particular ambient wind (reflecting wind speed relative to the earth not relative to the rotor blade) and rotating at a particular rotational speed. In particular, the information indicative of the rate of heat loss may take into account the rotational speed at which the rotor shaft rotates at which the rotor blade is connected.

In particular, the ambient wind speed, the rotational speed as well as the ambient temperature may all contribute to the rate of heat loss. The rate of heat loss may increase with decreasing temperature, may increase with increasing ambient wind speed and may increase with increasing rotational speed and may also depend on a location on the blade considered, in particular a radial position of the location. In particular, the rate of heat loss or the information indicative of the rate of heat loss may be based on a combination of the ambient temperature, the ambient wind speed and the rotational speed of the rotation shaft.

In particular, the information may be derived from measured quantities, such as from a measured ambient temperature, a measured ambient wind speed and a measured rotational speed. The influencing factors, i.e. the ambient temperature, the ambient wind speed and the rotational speed, may be combined for example in a mathematical formula to derive the rate of heat loss therefrom.

The controlling the wind turbine may comprise adjusting a power output of the wind turbine, which may for example comprise controlling a (AC-DC-AC) converter of the wind turbine by supplying a particular reference voltage or reference power or reference reactive power. Thereby, the torque of the generator acting on the rotating rotation shaft may be altered or adjusted, thereby controlling the rotational speed. The controlling the wind turbine may further comprise activating or deactivating or adjusting to a particular output level a heating system or a general de-icing system which causes a de-icing of the rotor blade, when ice has been formed on the rotor blade.

According to an embodiment of the present invention the controlling the wind turbine comprises adjusting a rotational speed of the rotor at which the rotor blade is connected, wherein the adjusting is based on the information which is indicative of the rate of heat loss of the rotor blade. Since the rotational speed of the rotor may affect the rate of heat loss, the rate of heat loss may be altered by altering or adjusting the rotational speed of the rotor.

In particular, the controlling the wind turbine may be based on the information indicative of the rate of heat loss and may further be based on the ambient temperature. In particular, by adjusting the rotational speed of the rotor formation of ice on the rotor blade may be reduced or even avoided. In particular, while adjusting the rotational speed of the rotor a de-icing system may be activated (turned on).

According to an embodiment of the present invention the rotational speed of the rotor shaft is decreased for increasing rate of heat loss. In particular, the rate of heat loss may comprise or may be based on or may represent a chill-factor. In particular, the heat energy per time transferred from the rotor blade to the ambient air may increase with increasing effective wind speed (which may be derived from a combination of the ambient wind speed and the rotational speed of the rotor shaft) and may increase with decreasing ambient temperature.

In particular, the rotational speed of the rotor may be (adjusted to be) larger than zero, in order to reduce mechanical load to components of the wind turbine, such as a gear or a bearing at which the rotation shaft is supported relative to a nacelle. Keeping the rotation shaft running may decrease the mechanical load components of the wind turbine are subjected to.

According to an embodiment of the present invention the controlling the wind turbine comprises operating (in particular activating and/or deactivating and/or adjusting a heat power output) a de-icing system for de-icing the rotor blade in dependence of the information. In particular, the de-icing system may comprise a heating element, such as an electric heater which has two operation states, namely activated or deactivated. The de-icing system may comprise a vibration system for vibrating the blade for mechanically removing ice. Thereby, the method may be simplified.

According to an embodiment of the present invention the rotor is rotated while the de-icing system is activated, if the rate of heat loss is below a heat loss threshold or the chill-factor is above a chill-factor threshold.

However, if the rate of heat loss is above the heat loss threshold (or the chill-factor is below the chill-factor threshold), it may be required to stop the rotor from rotating in order to effectively remove the ice from the rotor blade by activating the de-icing system. However, when the rotor is rotating, if the rate of heat loss is below the heat loss threshold, there may still be electric energy generated by the wind turbine and may be supplied to a utility grid to which a number of consumers are connected, to consume the electric energy.

However, if the rate of heat loss is above the heat loss threshold, activating the de-icing system upon rotating the rotor shaft may not suffice to remove the ice on the rotor blades. Only if the rotor is stopped, the thermal output energy of the de-icing system may be great enough to be higher than the rate of heat loss in order to melt the ice which has been formed on the rotor blade.

According to an embodiment of the present invention the obtaining the information comprises obtaining a chill-factor signal indicative of a chill-factor the rotor blade is subjected to.

In particular, according to an embodiment of the present invention the de-icing of the blades as well as the production of power of the wind turbine is adapted according to a combined level of wind speed and temperature, i.e. according to the chill-factor. Thereby, the chill-factor may be an indication of how different combinations of wind speed and temperature are perceived by the rotor blade. In particular, the chill-factor may decrease with increasing wind speed and the chill-factor may decrease with decreasing temperature. A pair of a given effective wind speed (obtained by combining the ambient wind speed and the rotational speed) and a given temperature may be associated with a particular chill factor.

Thereby, the effective wind speed may be derived from a combination of the ambient wind speed and the rotational speed of the rotor. Thus, in particular the chill-factor may depend on three quantities, in particular the ambient temperature, the ambient wind speed and also the rotational speed of the rotor shaft at which the rotor blade is connected. In particular, more heat energy output from the de-icing system may be needed for achieving the same level of de-icing at high wind speeds than at lower wind speeds. Thereby, also the rotation of the rotor is taken into account.

Taking into account the chill-factor signal for controlling the wind turbine (in particular regarding the rotation speed of the rotation shaft and/or activating or deactivating the de-icing system) may allow for a more effective operation of the wind turbine. In particular, the chill-factor signal may be taken into account to predicting the formation of ice on the rotor blade. Further, the operation of the wind turbine may be adjusted according to the prediction of the formation of ice. Thereby, in particular, the rotation speed of the wind turbine may be adjusted to a higher value than in conventional methods and wind turbines, thereby increasing the electrical power output of the wind turbine even under icing conditions, such as at temperature below 0°C.

According to an embodiment of the present invention the rotational speed is decreased for decreasing chill-factor. However, whenever the chill-factor is above a particular chill-factor threshold the rotational speed may be adjusted to be above zero, such that the rotor is still rotating but does not stop. In particular, the rotational speed may correspond to an idling operation mode of the wind turbine in which no electric energy is output from the wind turbine while nevertheless the rotation shaft is still rotating, such as e.g. with two revolutions per minute.

Thereby, mechanical load to components of the wind turbine, such as a bearing, may be reduced.

According to an embodiment of the present invention the chill-factor decreases with increasing wind speed of ambient wind, wherein the chill-factor decreases with decreasing ambient temperature, wherein the chill-factor decreases with increasing rotational speed.

Taking into account the chill-factor may be a simple manner in order to control the wind turbine, in order to avoid or reduce icing of the rotor blade and at the same time producing as much electric energy as possible.

According to an embodiment of the present invention the obtaining the chill-factor signal comprises obtaining a temperature signal indicative of an ambient temperature; obtaining an ambient wind speed signal indicative of an ambient wind speed of ambient wind (relative to the earth not relative to the rotor blade); obtaining a rotational speed signal indicative of rotational speed of the rotor (and thus of the rotor blade); generating the chill-factor signal based on a combination of the temperature signal, the ambient wind speed signal and the rotational speed signal.

The ambient temperature may for example be measured by a temperature sensor installed at the wind turbine (in particular installed at a nacelle of the wind turbine) or installed at a wind park controller remote from the wind turbine. Also the ambient wind speed signal may be derived or measured by a wind speed sensor which may be installed at the wind turbine or installed at a wind farm controller remote from the wind turbine. In particular, the rotational speed signal may be obtained from a conventionally installed rotational speed sensor installed at the generator or a gear of the wind turbine.

Based on the temperature signal, the ambient wind speed signal and the rotational speed signal, the chill-factor or the chill-factor signal may be derived using a lookup table or may be derived using a mathematical function or a mathematical equation. Thereby, a simple manner of obtaining the chill-factor signal is provided.

According to an embodiment of the present invention the operating the wind turbine comprises: if the chill-factor is within a first chill-factor range, operating the wind turbine in a first mode which comprises adjusting the rotational speed to a first, in particular nominal, rotational speed and outputting electric power from the wind turbine; if the chill-factor is within a second chill-factor range, operating the wind turbine in a second mode which comprises adjusting the rotational speed to a second rotational speed slower than the first rotational speed and outputting electric power from the wind turbine, wherein the first chill-factor range comprises higher chill-factors than the second chill-factor range.

The nominal rotation speed may be a rotational speed of the rotor which allows maximal power output of the wind turbine and at the same time keeps the mechanical load of the component in an acceptable range. The nominal rotational speed may be in particular between about 15 to 16 revolutions per minute (RPM) for a turbine with a rotor on 101 meter.

Thereby, the de-icing system may be continuously activated. The second rotational speed may for example be between 6 and 7 rpm. Thereby, the turbine may produce its own power for de-icing.

In particular, the chill-factor may be represented by a vector having three components comprising the ambient temperature, the ambient wind speed and the rotational speed. The different chill-factor ranges may then be represented by three-dimensional space regions in a three-dimensional coordinate system having as axis the ambient temperature, the ambient wind speed and the rotational speed.

According to an embodiment of the present invention the ambient wind speed and the rotational speed may be combined into an effective wind speed acting on the rotor blade, in particular on a leading edge of the rotor blade, by forming a vector summation of the ambient wind speed (represented as a three-dimensional vector) and a rotation related wind speed vector.

According to an embodiment of the present invention the method further comprises operating the wind turbine in the first mode and switching to the second mode, if ice is detected at the rotor blade after operating the wind turbine in the first mode for a first time interval, in particular further comprising: operating the wind turbine in the second mode and switching to the first mode, if no ice is detected at the rotor blade after operating the wind turbine in the second mode for another first time interval.

Switching the wind turbine from the first mode to the second mode may improve reduction of ice on the rotor blade, since the second rotational speed is lower than the first rotational speed thereby reducing the rate of heat loss of the rotor blade, in order to improve melting of the ice.

If however, after operating the wind turbine for the other first time interval in the second mode no ice is anymore detected at or on the rotor blade, the wind turbine may be switched to the first mode, in order to increase the electric power output of the wind turbine.

According to an embodiment of the present invention the operating the wind turbine comprises: if the chill-factor is within a third chill-factor range, operating the wind turbine in a third mode which comprises adjusting the rotational speed to a third rotational speed slower than the second rotational speed but greater than zero and outputting no electric power from the wind turbine; if the chill-factor is within a fourth chill-factor range, operating the wind turbine in a fourth mode which comprises adjusting the rotational speed to zero and outputting no electric power from the wind turbine; wherein the second chill-factor range comprises higher chill-factors than the third chill-factor range, wherein the third chill-factor range comprises higher chill-factors than the fourth chill-factor range.

In the third mode the wind turbine may in particular be operated in an idling mode or idle mode, wherein the rotor is still rotating, but wherein no electric energy is output from the wind turbine. At the fourth operation mode the chill-factor may be so low that without stopping the rotor the ice can not be melted.

According to an embodiment of the present invention the method further comprises operating the wind turbine in the second mode and switching to the third mode, if ice is detected at the rotor blade after operating the wind turbine in the second mode for a second time interval, in particular further comprising: operating the wind turbine in the third mode and switching to the second mode, if no ice is detected at the rotor blade after operating the wind turbine in the third mode for another second time interval; in particular further comprising: operating the wind turbine in the third mode and switching to the fourth mode, if ice is detected at the rotor blade after operating the wind turbine in the third mode for a third time interval, in particular further comprising: operating the wind turbine in the fourth mode and switching to the third mode, if no ice is detected at the rotor blade after operating the wind turbine in the fourth mode for another third time interval.

In particular, the wind turbine may be switched from one of the four modes to another of the four modes which has a slower rotational speed in order to increase the effectiveness of melting ices on the rotor blade. However, if no ice is detected anymore at the rotor blade the wind turbine may be switched from one of the four modes to another one of the four modes which have a higher rotational speed. Thereby, the efficiency of the wind turbine may further be improved.

According to an embodiment a number of other operation modes may be defined which may be characterized by a particular rotational speed which is adjusted. According to an embodiment of the present invention the rotational speed of the rotor is continuously adjusted depending on the information and/or depending also on the detection of ices on the rotor blade.

It should be understood that features individually or in any combination disclosed, described, mentioned, explained or applied for a method for operating a wind turbine may also be applied (individually or in any combination) to an arrangement for operating a wind turbine according to an embodiment of the present invention and vice versa.

According to an embodiment of the present invention it is provided an arrangement for operating a wind turbine, in particular during an icing condition (such as during a temperature at or above or below two degrees centigrade), the arrangement comprising: an input for obtaining information indicative of a rate of heat loss of a rotor blade of the wind turbine; a controller for controlling the wind turbine based on the information.

In particular, the rate of heat loss may comprise or may correspond to a chill-factor. In particular, the arrangement may comprise a processor being adapted to derive a chill-factor from an ambient wind signal, an ambient temperature signal and the rotational speed signal. The controller may have output control lines which may be used to send control signals to a heating system or a de-icing system or to a wind turbine controller or converter controlling the rotational speed of the wind turbine. In particular, a converter of the wind turbine may be controlled by the controller in order to adjust a torque acting on the rotor such as to adjust the rotational speed of the rotor.

In particular, the de-icing system may in particular the operated in dependence of the detection of ices at the rotor blade.

Embodiments of the present invention are now described with reference to the accompanying drawings. The invention is not limited to the illustrated or described embodiments.

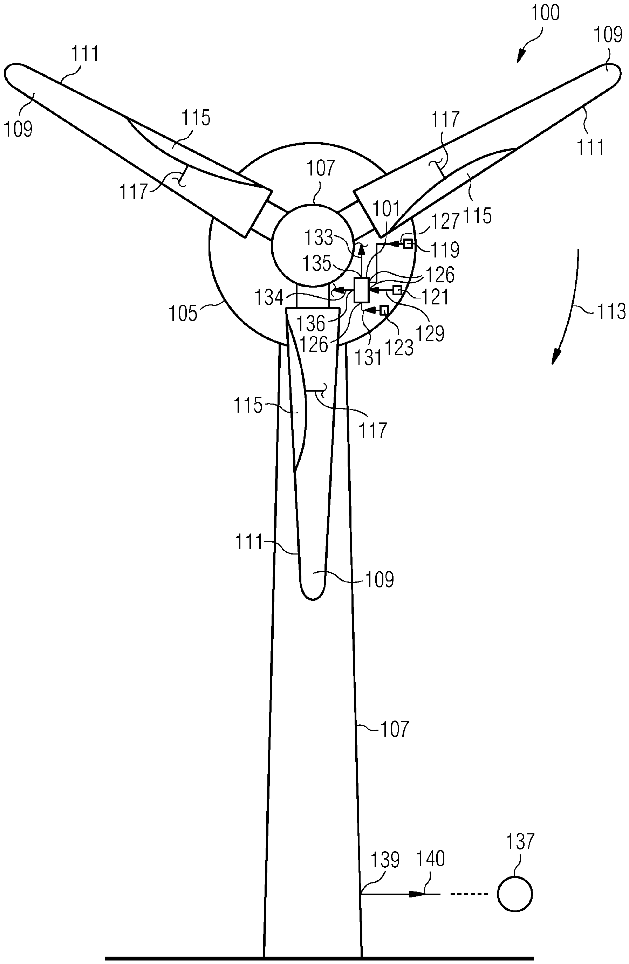

Brief Description of the Drawing

The figure schematically illustrates a wind turbine comprising an arrangement according to an embodiment of the present invention.

Detailed Description

The figure schematically illustrate a wind turbine 100 comprising an arrangement 101 for operating the wind turbine 100, wherein the arrangement 101 is adapted to perform a method for operating a wind turbine according to an embodiment of the present invention.

The wind turbine 100 comprises a wind turbine tower 103, a nacelle 105 mounted on top of the wind turbine tower, wherein the nacelle 105 comprises a rotatably supported rotation shaft 107 having a hub at which rotor blades 109 are connected.

Each of the rotor blades 109 (in the figure three rotor blades are illustrated being spaced apart by 120°) comprises a leading edge 111 which represents those edges which lead, when the rotation shaft 107 rotates in the clockwise direction as indicated by the arrow 113. At the leading edges 111 of the rotor blades 109 a carbon fiber mesh 115 is arranged, thereby covering the leading edges 111. The electrical line 117 allows to supply an electric current or an electric voltage to the carbon mesh 115, in order to lead an electric current through the carbon mesh 115 which heats the edges 111 of the rotor blades 109 by electric resistance heating.

The wind turbine 100 further comprises an arrangement 101 for operating the wind turbine 100, in particular during a temperature at or below 2 °C or 0 °C.

The wind turbine 100 further comprises a temperature sensor 119 measuring an ambient temperature 127, wherein the temperature sensor 119 is installed within the nacelle 105. Further, a wind speed sensor 121 is installed in the nacelle, wherein the wind speed sensor 121 measures the ambient wind speed 129. Further, in the nacelle 105 a rotational speed sensor 123 is installed which measures the rotational speed 131 (for example in RPM) of the rotation shaft 107. The sensors 119, 121 and 123 provide respective measurement signals 127, 129, 131 via signal lines 125 which receives the measurement signal at respective inputs 126. From the measurement signals obtained by the temperature sensor 119, the wind speed sensor 121 and the rotational speed sensor 123 information indicative of a rate of heat loss or information regarding a chill-factor can be obtained by the arrangement 101.

The following Table 1 exemplary illustrates a procedure how to associate a particular combination of a wind speed (representing the ambient wind speed) and the temperature (representing the ambient temperature) to four different chill-factor ranges A, B, C and D.

Table 1

| Temperature [°C]/Wind speed [m/s] | 3 | 5 | 7 | 9 | 13 | 15 | 17 |
|---|---|---|---|---|---|---|---|
| 2 | A | A | A | A | A | A | A |
| 0 | A | A | A | A | A | A | A |
| -2 | A | A | A | B | B | B | B |
| -4 | A | B | B | B | B | C | C |
| -6 | B | B | B | B | C | C | C |
| -8 | B | B | B | C | C | D | D |
| -10 | B | B | C | C | D | D | D |
| -12 | B | C | C | C | D | D | D |
| -15 | C | C | C | C | D | D | D |
| -18 | C | D | D | D | D | D | D |
| -21 | D | D | D | D | D | D | D |
| -24 | D | D | D | D | D | D | D |

The cells in the Table 1 labelled by "A" represent a first chill-factor range, the cells labelled with "B" represent a second chill-factor range, the cells labelled with "C" represent a third chill-factor range and the cells labelled with "D" represent a fourth chill-factor range.

Within a particular chill-factor range a rate of heat loss of the rotor blades 109 may have similar values, whereas the rate of heat loss may be quite different in different chill-factor ranges. In particular, the chill-factor is here categorized in four different chill-factor ranges A, B, C and D. More or less categories may be provided, such as two categories, three categories, five categories, six categories, seven categories, ten categories or between ten and fifty categories.

When the ambient conditions fall within the fourth chill-factor range D, then more heating energy is required to be supplied to the carbon fiber mesh 115, in order to melt the ice on the rotor blades 109, then in the third chill-factor range, in the second chill-factor range or in the first chill-factor range.

However, what is not reflected in the Table 1 is that the effective chill-factor is also dependent on the rotational speed of the rotation shaft 107. Thus, in the different chill-factor ranges A, B, C and D the wind turbine is operated in different modes A, B, C and D in which the rotational speed of the rotation shaft 107 is adjusted to different values.

In the types may briefly be described as follows:

**A    Anti-ice full speed Anti-ice reduced**

**B    speed**

**C    De-ice idle**

**D    De-ice full stop**

Thereby, the controller 101 obtains the measurement values from the sensors 119, 121 and 123, indicating the ambient temperature, the ambient wind speed and the rotational speed and derives thereform information indicative of a rate of heat loss of the rotor blade or information indicative of a chill-factor. From this information the arrangement 101 derives a control signal 133 which is output at an output terminal 135 and which is supplied to a not illustrated converter of the wind turbine in order to adjust the rotational speed of the rotation shaft 107.

Further at an output terminal 136 of the controller 101 a control signal 134 is output for controlling the heater 115 via the line 117.

Thereby, in the first chill-factor range A (operation mode A) the rotor 107 is operated at a full rotor speed, i.e. a nominal rotor speed.

However, in the second chill-factor range B the rate of heat loss is greater than in the first chill-factor range A. Therefore, in the second chill-factor range B the rotor speed is reduced (operation mode B) to a second rotational speed which is lower than the first rotational speed which equals the nominal rotational speed.

Further, in the third chill-factor range C the rate of heat loss of the rotor blade is still greater than in the second chill-factor range B. Therefore, the rotational speed is even more decreased to a third rotational speed (operation mode C), which may correspond or may be equal to an idling rotational speed. Further, unlike in the first and second chill-factor ranges (corresponding to first operational mode A and to second operational mode B), where still electric energy is output from the wind turbine to an utility grid, in the third chill-factor range the wind turbine is operated in a third mode C, wherein no electric energy is output from the wind turbine 100 to a utility grid 137 via the power output terminal 139.

In particular, different rotor speeds gives different blade tip speeds which in turn induces different chill-factors at the blade tip. As a first example, if icing is detected on the blade 109 and the wind speed is measured to be 7 m/s and the temperature is -2°C, then the de-icing system is turned on, but the wind turbine rotor is kept running at nominal rotational speed, i.e. the first rotational speed (chill-factor range A).

If, as a second example, icing is detected on the blade 109 and the wind speed is measured to be 9 m/s and the temperature is measured to be -2°C, then the de-icing system is turned on and the wind turbine rotor is operated at a second rotational speed which is lower than the first rotational speed.

The arrangement 101 is adapted to carry out a method according to an embodiment of the present invention. Thereby, advantageously it is enabled that the wind turbine 100 produces an electric power stream 140 (to the grid 137) at its power output terminal 139 even in many running conditions, where icing has occurred on the turbine blades 109. In particular, the method performed by the arrangement 101 may be implemented in hardware and/or in software and may be executed completely automatically without requiring manual intervention by any operator.

The method and the arrangement may be cost-effective and the downtime of the wind turbine may be minimized only to cases of severe icing.

Further, the four chill-factor ranges A, B, C, D may correspond to four different operation modes of the wind turbine. In particular, it may be switched between operational modes of the wind turbine, as exemplified in the following.

After having operated the wind turbine in the first operation mode (corresponding to chill-factor range A) for for example 15 minutes it may be operated in the second operation mode (corresponding to the chill-factor range B). The same may be applied between the other operation modes. As an example, if icing is detected on the blade and the de-icing control enters de-icing mode A, this de-icing mode A may be maintained during for example 15 minutes. If after this time span icing is still detected, it may indicate that the de-icing is not efficient enough for the specific ambient conditions. Therefore, the mode A may be changed to mode B, whereby the rotational speed of the rotor 107 is reduced whereby the chill-factor is also reduced to increase melting capability.

This may be performed in an iterative manner, as if after switching to mode B icing is still detected after 15 minutes, then the mode B may be switched to mode C and so forth.

In various embodiments of the invention the de-icing control may also be allowed to return after e.g. being in mode C for some time and icing is not detected any longer to return to the mode B or even to mode A.

The chill-factor may be e.g. derived according to:

$$WCI = (10\sqrt{V} - V + 10.5) \cdot (33 - T_a)$$

Where:

WCI = Wind chill index, kcal/m2/h
V = Wind velocity, m/s
Ta = Air temperature, °C

Alternatively other relations may be used.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method for operating a wind turbine (100), in particular during an icing condition, the method comprising:

   obtaining information (127, 129, 131) indicative of a rate of heat loss of a rotor blade (109) of the wind turbine (100);
   controlling (133, 134) the wind turbine based on the information.

2. Method according to claim 1, wherein controlling the wind turbine comprises:

   adjusting a rotational speed of a rotor (107) at which the rotor blade is connected based on the information.

3. Method according to claim 1 or 2, wherein the rotational speed is decreased for increasing rate of heat loss.

4. Method according to one of the preceding claims, wherein controlling the wind turbine comprises:

   operating a de-icing system (115) for de-icing the rotor blade (109) in dependence of the information.

5. Method according to the preceding claim, wherein the rotor is rotated while the de-icing system is activated, if the rate of heat loss is below a heat loss threshold or the chill-factor is above a chill-factor threshold.

6. Method according to one of the preceding claims, wherein obtaining the information comprises:

   obtaining a chill-factor (127, 129, 131) signal indicative of a chill-factor the rotor blade (109) is subjected to.

7. Method according to the preceding claim, wherein the rotational speed is decreased for decreasing chill-factor.

8. Method according to claim 6 or 7,
   wherein the chill-factor decreases with increasing wind speed (127) of ambient wind,
   wherein the chill-factor decreases with decreasing ambient temperature (129),
   wherein the chill-factor decreases with increasing rotational speed (131).

9. Method according to one of claims 6 to 8, wherein the obtaining the chill-factor signal comprises:

   obtaining a temperature signal (127) indicative of an ambient temperature;
   obtaining a wind speed signal (129) indicative of a wind speed of ambient wind;
   obtaining a rotational speed signal (131) indicative of rotational speed of the rotor;
   generating the chill-factor signal based on a combination of the temperature signal, the wind speed signal and the rotational speed signal.

10. Method according to one of claims 6 to 9, wherein the operating the wind turbine comprises:

    if the chill-factor is within a first chill-factor range, operating the wind turbine in a first (A) mode which comprises adjusting the rotational speed to a first, in particular nominal, rotational speed and outputting electric power from the wind turbine;
    if the chill-factor is within a second chill-factor range, operating the wind turbine in a second (B) mode which comprises adjusting the rotational speed to a second rotational speed slower than the first rotational speed and outputting electric power from the wind turbine,
    wherein the first chill-factor range comprises higher chill-factors than the second chill-factor range.

11. Method according to the preceding claim, further comprising:

    operating the wind turbine in the first (A) mode and switching to the second mode, if ice is detected at the rotor blade after operating the wind turbine in the first mode for a first time interval,

    in particular further comprising:

operating the wind turbine in the second (B) mode and switching to the first mode, if no ice is detected at the rotor blade after operating the wind turbine in the second mode for another first time interval.

12. Method according to claim 10 or 11, wherein the operating the wind turbine comprises:

if the chill-factor is within a third chill-factor range, operating the wind turbine in a third (C) mode which comprises adjusting the rotational speed to a third rotational speed slower than the second rotational speed but greater than zero and outputting no electric power from the wind turbine;
if the chill-factor is within a fourth chill-factor range, operating the wind turbine in a fourth (D) mode which comprises adjusting the rotational speed to zero and outputting no electric power from the wind turbine;
wherein the second chill-factor range comprises higher chill-factors than the third chill-factor range,
wherein the third chill-factor range comprises higher chill-factors than the fourth chill-factor range.

13. Method according to the preceding claim, further comprising:

operating the wind turbine in the second (B) mode and switching to the third (C) mode, if ice is detected at the rotor blade after operating the wind turbine in the second mode for a second time interval,

in particular further comprising:

operating the wind turbine in the third (C) mode and switching to the second (B) mode, if no ice is detected at the rotor blade after operating the wind turbine in the third mode for another second time interval;

in particular further comprising:

operating the wind turbine in the third (C) mode and switching to the fourth (D) mode, if ice is detected at the rotor blade after operating the wind turbine in the third (C) mode for a third time interval,

in particular further comprising:

operating the wind turbine in the fourth (D) mode and switching to the third (C) mode, if no ice is detected at the rotor blade after operating the wind turbine in the fourth mode for another third time interval.

14. Arrangement (101) for operating a wind turbine (100), in particular during an icing condition, the arrangement comprising:

an input (126) for obtaining information (127, 129, 131) indicative of a rate of heat loss of a rotor blade (109) of the wind turbine (100);
a controller for controlling (133, 134) the wind turbine based on the information.

15. Arrangement according to claim 14, further comprising:

a de-icing system (115) comprising a heating system in thermal contact with the rotor blade (109) and/or a vibration system in mechanical contact with the rotor blade,
the heating system in particular comprising a carbon fiber mesh (115) through which an electric current can be lead for heating, the fiber mesh arranged at at least a leading edge (111) of the rotor blade (109).

Europäisches
Patentamt

European
Patent Office

Office européen
des brevets

**EUROPEAN SEARCH REPORT**

Application Number

EP 12 15 4477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | DE 10 2010 015595 A1 (WOBBEN ALOYS [DE])<br>20 October 2011 (2011-10-20)<br>* abstract *<br>* paragraph [0014] *<br>* paragraph [0018] *<br>* paragraph [0019] *<br>* paragraph [0022] *<br>* paragraphs [0027] - [0029] *<br>* paragraph [0037] *<br>* paragraph [0041] *<br>----- | 1,3-8,<br>14,15<br>10-13 | INV.<br>F03D11/00 |
| X<br><br><br>A | WO 2004/057182 A1 (LM GLASFIBER AS [DK];<br>GRABAU PETER [DK])<br>8 July 2004 (2004-07-08)<br>* abstract *<br>* page 3, lines 21-29 *<br>* page 4, lines 8-10 *<br>* page 4, lines 19-22 *<br>* page 5, lines 13-29 *<br>* page 6, lines 3-5 *<br>----- | 1,2,6,8,<br>9,14,15<br>10-13 | |
| A | WO 2011/127996 A1 (SIEMENS AG [DE];<br>LAURBERG HANS [DK])<br>20 October 2011 (2011-10-20)<br>* page 7, lines 32-34 *<br>* page 12, lines 15-29 *<br>----- | 15 | TECHNICAL FIELDS SEARCHED (IPC)<br><br>F03D |

The present search report has been drawn up for all claims

| Place of search | Date of completion of the search | Examiner |
|---|---|---|
| Munich | 19 June 2012 | Cabrele, Silvio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................................
& : member of the same patent family, corresponding
    document

EPO FORM 1503 03.82 (P04C01)

# EP 2 626 557 A1

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2012

| Patent document cited in search report | Publication date | Patent family member(s) | | Publication date |
|---|---|---|---|---|
| DE 102010015595 A1 | 20-10-2011 | NONE | | |
| WO 2004057182 A1 | 08-07-2004 | AU | 2003287901 A1 | 14-07-2004 |
| | | CA | 2508316 A1 | 08-07-2004 |
| | | CN | 1729359 A | 01-02-2006 |
| | | DK | 200201963 A | 21-06-2004 |
| | | EP | 1573199 A1 | 14-09-2005 |
| | | NO | 330604 B1 | 23-05-2011 |
| | | US | 2006034692 A1 | 16-02-2006 |
| | | WO | 2004057182 A1 | 08-07-2004 |
| WO 2011127996 A1 | 20-10-2011 | NONE | | |

EPO FORM P0459

For more details about this annex : see Official Journal of the European Patent Office, No. 12/82

**EP 2 626 557 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011018695 A1
- WO 2010028653 A2